# EUROPEAN PATENT APPLICATION

(11) **EP 2 312 862 A2**
(43) Date of publication of application: **20.04.2011**
(21) Application number: 10176614.5
(22) Date of filing: 14.09.2010
(51) Int. Cl.: H04N 13/00

(54) **Image signal processing device, method and program for storing omnidirectional views in a video standard, and omnidirectional 3D display**

(30) Priority: 15.10.2009 JP 2009238367
(71) Applicant: Sony Corporation, Tokyo 108-0075 (JP)
(72) Inventor: YASUNAGA, Hiroaki, Minato-ku Tokyo 108-0075 (JP); ITO, Katsuhisa, Minato-ku Tokyo 108-0075 (JP); ISHIKAWA, Hirotaka, Minato-ku Tokyo 108-0075 (JP)
(74) Representative: Turner, James Arthur

(57) **Abstract**

An image signal processing device supplying entire-circumference viewpoint images including plural viewpoint images respectively corresponding to plural viewpoints provided on the circumference of a circle with the center at a subject to a display device displaying the subject as a stereoscopic image, includes: a buffering means for buffering the inputted entire-circumference viewpoint images; and an arrangement means for generating a video signal of a given video standard by arranging the buffered entire-circumference viewpoint images on frames of the given video standard.

## Description

The invention relates to an image signal processing device, an image signal processing method, an image display device, an image display method, a program, an image display system and a video signal, in particular (though not exclusively) which are suitable for being used in a case in which an image signal is supplied to a display device capable of displaying a subject three dimensionally.

There exists a technique of displaying stereoscopic images on a planar display which is applied to a television receiver and the like in related art. As the above technique, for example, there is a technique of using parallax between right and left eyes of a person who sees the display. Specifically, for example, images for the left eye and images for right eye are displayed on the same planar display further through a polarizing filter, thereby realizing stereoscopic vision by allowing images for the left eye to be seen by the left eye and allowing images for the right eye to be seen by the right eye.

On the other hand, a entire-circumference 3D image display device which can display 3D images over the entire circumference of a subject by using plural images of different viewpoints (referred to as viewpoint images in the following description) imaged from plural viewpoints provided on the circumference of a circle with the center at the subject (or generated on the assumption that the subject is seen from the entire circumference by the computer graphics) (for example, refer to JP-A-2004-177709 (Patent Document 1) or refer to JP-A-2005-114771(Patent Document 2)).

The above entire-circumference 3D image display device has a cylinder-shaped display unit and is configured to display video so as to allow a user who sees a side surface of the cylinder shape from an arbitrary direction to view the subject three-dimensionally.

As described above, viewpoint images of the entire circumference will be inputted to the entire-circumference 3D image display device. However, there is no general video signal standard for inputting viewpoint images of the entire circumference into the entire-circumference 3D image display device.

Accordingly, though there are requests for establishing an input method of the video signal suitable for the entire-circumference 3D image display device, for encoding plural viewpoint images efficiently and for displaying viewpoint images of the entire circumference of the subject also on a planar display at the time of editing or at other occasions, these requests have not been responded.

Thus, it is desirable to establish a method of storing viewpoint images of the entire circumference of the subject in frames of a video standard having versatility, which can be used in a planar display of related art.

Various respective aspects of the invention are defined in the appended claims. Combinations of features from the dependent claims may be combined with features of the independent claims as appropriate and not merely as explicitly set out in the claims.

According to a first embodiment of the invention, there is provided an image signal processing device supplying entire-circumference viewpoint images including plural viewpoint images respectively corresponding to plural viewpoints provided on the circumference of a circle with the center at a subject to a display device displaying the subject as a stereoscopic image, which includes a buffering means for buffering the inputted entire-circumference viewpoint images; and an arrangement means for generating a video signal of a given video standard by arranging the buffered entire-circumference viewpoint images on frames of the given video standard.

The arrangement means can arrange the buffered entire-circumference viewpoint images by dividing them into plural frames.

The arrangement means can divide the buffered entire-circumference viewpoint images into plural frames and can arrange the viewpoint images whose viewpoints are adjacent at the same position in the plural frames.

The image signal processing device according to the first embodiment of the invention may further includes a turning means for turning the buffered entire-circumference viewpoint images by given degrees, in which the arrangement means arranges the turned entire-circumference viewpoint images on the frames.

The image signal processing device according to the first embodiment of the invention may further includes a generation means for generating intermediate frames in which plural viewpoint images respectively corresponding to virtual viewpoints assumed between plural viewpoints provided on the circumference of the circle are arranged based on the plural frames in which the entire-circumference viewpoint images are arranged.

The image signal processing device according to the first embodiment of the invention may further include an adjustment means for adjusting the plural viewpoint images simultaneously imaged from the plural viewpoints provided on the circumference of the circle with the center at the subject so that imaging timings thereof are different.

According to the first embodiment of the invention, there is also provided an image signal processing method of an image signal processing device supplying entire-circumference viewpoint images including plural viewpoint images respectively corresponding to plural viewpoints provided on the circumference of a circle with the center at a subject to a display device displaying the subject as a stereoscopic image, which includes the steps of buffering the inputted entire-circumference viewpoint images and generating a video signal of a given video standard by arranging the buffered entire-circumference viewpoint images on frames of the given video standard by the image signal processing device.

According to the first embodiment of the invention, there is provided a program for controlling an image signal processing device supplying entire-circumference viewpoint images including plural viewpoint images respectively corresponding to plural viewpoints provided on the circumference of a circle with the center at a subj ect to a display device displaying the subject as a stereoscopic image, which allows a computer of the image signal processing device to execute processing including the steps of buffering the inputted entire-circumference viewpoint images and generating a video signal of a given video standard by arranging the buffered entire-circumference viewpoint images on frames of the given video standard.

According to the first embodiment of the invention, the inputted entire-circumference viewpoint images are buffered, and the buffered entire-circumference viewpoint images are arranged on the frames of the given video standard to generate the video signal of the given video standard.

According to a second embodiment of the invention, there is provided an image display device displaying 3D images in a state of seeing a subject from the entire circumference based on a video signal inputted from an image signal processing device including a buffering means for buffering entire-circumference viewpoint images including plural viewpoint images respectively corresponding to plural viewpoints provided on the circumference of a circle with the center at a subject and an arrangement means for generating a video signal of a given video standard by arranging the buffered entire-circumference viewpoint images on frames of the given video standard, which includes an extraction means for extracting the entire-circumference viewpoint images from the frames of the video signal inputted from the image signal processing device and a display control means for displaying the extracted entire-circumference viewpoint images on a display.

The image display device according the second embodiment of the invention may further include a video signal output means for outputting the video signal inputted from the image signal processing device to another display device.

According to the second embodiment of the invention, there is also provided an image display method of an image display device displaying 3D images in a state of seeing a subject from the entire circumference based on a video signal inputted from an image signal processing device including a buffering means for buffering entire-circumference viewpoint images including plural viewpoint images respectively corresponding to plural viewpoints provided on the circumference of a circle with the center at a subject and an arrangement means for generating a video signal of a given video standard by arranging the buffered entire-circumference viewpoint images on frames of the given video standard, which includes the steps of extracting the entire-circumference viewpoint images from the frames of the video signal inputted from the image signal processing device and displaying the extracted entire-circumference viewpoint images on a display by the image display device.

According to the second embodiment of the invention, there is also provided a program for controlling an image display device displaying 3D images in a state of seeing a subject from the entire circumference based on a video signal inputted from an image signal processing device including a buffering means for buffering entire-circumference viewpoint images including plural viewpoint images respectively corresponding to plural viewpoints provided on the circumference of a circle with the center at a subject and an arrangement means for generating a video signal of a given video standard by arranging the buffered entire-circumference viewpoint images on frames of the given video standard, which allows a computer of the image display device to execute processing including the steps of extracting the entire-circumference viewpoint images from the frames of the video signal inputted from the image signal processing device and displaying the extracted entire-circumference viewpoint images on a display.

According to the second embodiment of the invention, entire-circumference viewpoint images are extracted from the frames of the video signal inputted from the image signal processing device and the extracted entire-circumference viewpoint images are displayed on the display.

According to a third embodiment of the invention, there is provided an image display system including an image display device displaying 3D images in a state of seeing a subject from the entire circumference and an image signal processing device supplying entire-circumference viewpoint images including plural viewpoint images respectively corresponding to plural viewpoints provided on the circumference of a circle with the center at a subject to the image display device, in which the image signal processing device includes a buffering means for buffering the inputted entire-circumference viewpoint images and an arrangement means for generating a video signal of a given video standard by arranging the buffered entire-circumference viewpoint images on frames of the given video standard, and in which the image display device includes an extraction means for extracting the entire-circumference viewpoint images from the frames of the video signal inputted from the image signal processing device and a display control means for displaying the extracted entire-circumference viewpoint images on a display.

According to the third embodiment of the invention, the inputted entire-circumference viewpoint images are buffered by the image signal processing device, and the buffered entire-circumference viewpoint images are arranged on frames of the given video standard to generate the video signal of the given video standard. Additionally, the entire-circumference viewpoint images are extracted from frames of the video signal inputted from the image signal processing device and the extracted entire-circumference viewpoint images are displayed on the display.

According to a fourth embodiment of the invention, there is provided a video signal in which entire-circumference viewpoint images including plural viewpoint images respectively corresponding to plural viewpoints provided on the circumference of a circle with the center at a subject are arranged on frames of a given video standard.

According to the first embodiment of the invention, the entire-circumference viewpoint images can be supplied to the image display device as the video signal of the video standard having versatility, which can be used in the planar display of related art.

According to the second embodiment of the invention, 3D images in a state of seeing the subject from the entire circumference can be displayed based on the video signal of the video standard having versatility, which can be used in the planar display of the related art.

According to the third embodiment of the invention, the entire-circumference viewpoint images can be supplied to the image display device as the video signal of the video standard having versatility, which can be used in the planar display of related art. In the image display device, 3D images in a state of seeing the subject from the entire circumference can be displayed.

According to the fourth embodiment of the invention, the entire-circumference viewpoint images of the subject can be stored in frames of the video standard having versatility, which can be used in the planar display of related art.

Embodiments of the invention will now be described with reference to the accompanying drawings, throughout which like parts are referred to by like references, and in which:
Fig. 1 is a block diagram showing a configuration example of a 3D image display system to which an embodiment of the invention is applied;
Fig. 2 is a view for explaining a case of including 18 pieces of entire-circumference viewpoint images;
Fig. 3 is a view showing a first arrangement example of storing viewpoint images in DVI frames;
Fig. 4 is a view showing a second arrangement example of storing viewpoint images in a DVI frame;
Fig. 5 is a view showing a third arrangement example of storing viewpoint images in DVI frames;
Fig. 6 is a view showing a fourth arrangement example of storing viewpoint images in DVI frames;
Fig. 7 is a view showing a fifth arrangement example of storing viewpoint images in DVI frames;
Fig. 8 is a view showing a sixth arrangement example of storing viewpoint images in DVI frames;
Figs. 9A to 9C are views for explaining effects of the sixth arrangement;
Fig. 10 illustrates views for explaining a generation method of intermediate frames;
Fig. 11 is a block diagram showing a configuration example of an image signal processing device of Fig. 1;
Fig. 12 is a block diagram showing a detailed configuration example of an intermediate frame generation unit of Fig. 11;
Fig. 13 is a flowchart for explaining DVI signal generation processing;
Fig. 14 is a diagram showing display timings of respective viewpoint images;
Fig. 15 is a diagram showing an adjustment method of imaging timings of respective viewpoint images;
Fig. 16 is a flowchart for explaining an intermediate frame generation processing;
Fig. 17 is a block diagram showing a configuration example of a entire-circumference 3D image display device of Fig. 1; and
Fig. 18 is a block diagram showing a configuration example of a computer.

Hereinafter, embodiments of the invention will be explained in detail with reference to the drawings.

### [Configuration example of a 3D image display system]

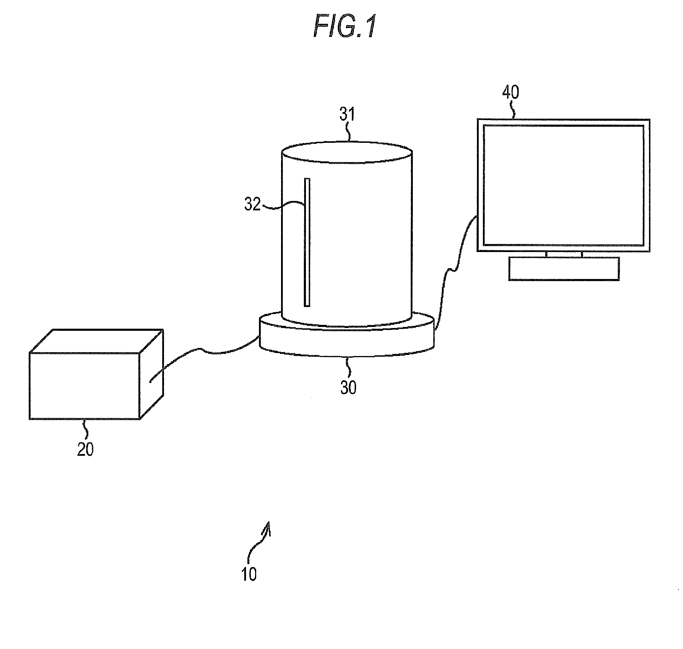

Fig. 1 shows a configuration example of a 3D image display system to which the embodiment of the invention is applied. A 3D image display system 10 includes an image signal processing device 20, an entire-circumference 3D image display device 30 and a planar display 40.

The image signal processing device 20 arranges entire-circumference viewpoint images inputted from the outside in frames of a video standard having versatility in which images can be inputted to a general planar display (a liquid crystal monitor, a television receiver and so on) 40 and outputs the images to the entire-circumference 3D image display device 30. Hereinafter, explanation will be made by applying a DVI (digital Visual interface) standard as the video standard having versatility, however, the video standard having versatility is not limited to the DVI standard.

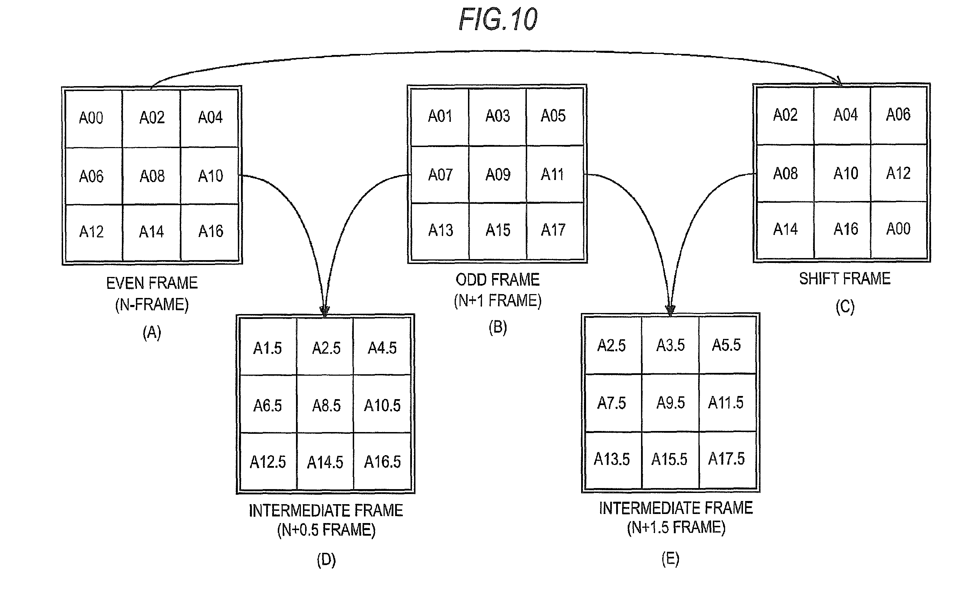

The image signal processing device 20 can generate intermediate frames in which viewpoint images obtained when midpoints of viewpoints respectively corresponding to inputted respective viewpoint images are taken as viewpoints are stored by using plural frames in which the inputted entire-circumference viewpoint images are stored. For example, when 18 pieces of viewpoint images whose viewpoints are shifted by 20 degrees respectively as the entire-circumference viewpoint images are stored by being divided into two frames, a state in which 36 pieces of viewpoint images whose viewpoints are shifted by 10 degrees respectively are stored by being divided into four frames can be finally created (described in detail with reference to Fig. 10).

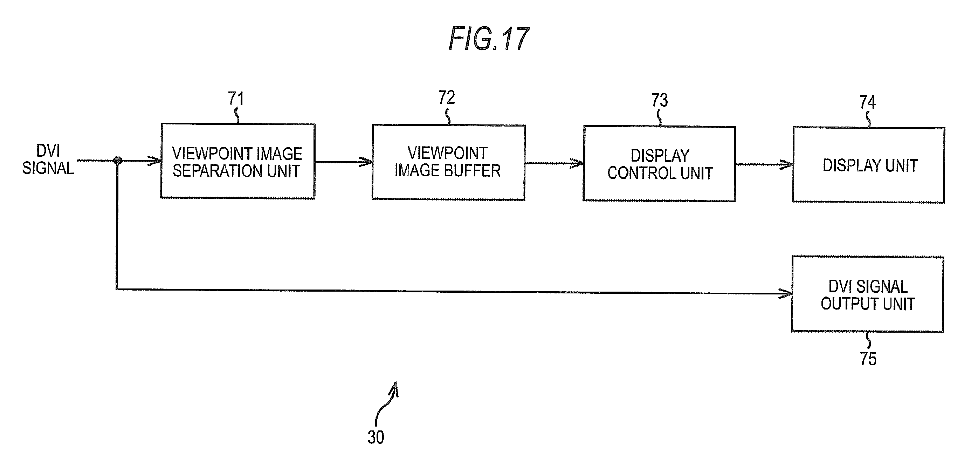

The entire-circumference 3D image display device 30 includes a cylinder portion 31 having plural slits 32, in which a given display unit 74 (Fig. 17) is built. The entire-circumference 3D image display device 30 extracts entire-circumference viewpoint images from respective frames (also referred to as DVI frames in the following description) of a video signal (also referred to as DVI signal in the following description) in the DVI standard inputted from the image signal processing device 20 and displays the images in a given order on the display unit 74. At this time, the cylinder portion 31 is driven to rotate. A user who sees a side surface of the cylinder portion 31 from an arbitrary direction will glimpse video on the display unit through the slits 32. Accordingly, the user can view the 3D images of a subject over the entire circumference.

The entire-circumference 3D image display device 30 also relays a DVI signal inputted from the image signal processing device 20 to the planar display 40.

As the entire-circumference 3D image display device 30, the entire-circumference 3D image display device which has been proposed in commonly-owned Japanese Patent Application No. 2008-317522 can be applied.

The planar display 40 displays images of the DVI signal inputted from the image signal processing device 20 through the entire-circumference 3D image display device 30.

It is also preferable that frames of the DVI standard storing viewpoint images are encoded by a given encoding method (such as MPEG 2 method) in the image signal processing device 20 to be outputted, and that the frames are decoded and displayed in the entire-circumference 3D image display device 30 and the planar display 40.

### [Explanation of entire-circumference viewpoint images]

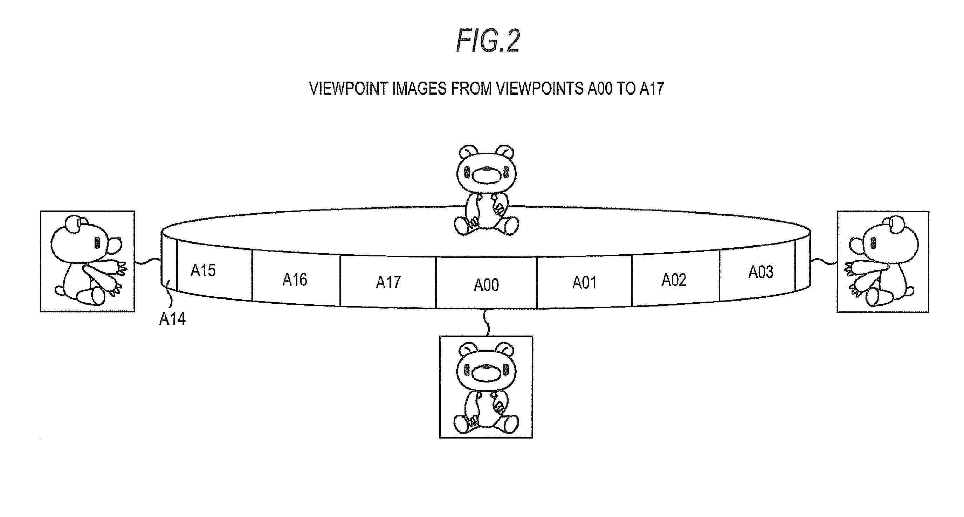

Fig. 2 shows a case in which 18 viewpoints are provided by dividing the circumference of a circle with a center at a subject into 18 and the subject is imaged from respective viewpoints at the same time to obtain viewpoint images. It is also preferable that viewpoint images are generated on the assumption that the subject is seen from respective viewpoints at the same time using computer graphics without imaging the subject in fact.

In the case of the drawing, 18 pieces of viewpoint images can be obtained. Here, assume that a viewpoint image seen from a given position (for example, a position where the subject is seen from the front) is "A00" as a reference, and viewpoint images obtained by shifting the viewpoint by 20 degrees (=360/18 degrees) are A01, A02 ...A17 .

The number of viewpoints provided in the entire circumference of the subject, in other words, the number of viewpoint images is not limited to 18, and it is also preferable the number is reduced or increased. For example, it is also preferable that 360 pieces of viewpoint images A000 to A359 are obtained over the whole circumference by shifting the viewpoint by 1 degree. The higher the number of viewpoints is, the smoother the 3D image of the subject can be displayed.

### [First arrangement example of storing viewpoint images in DVI frames]

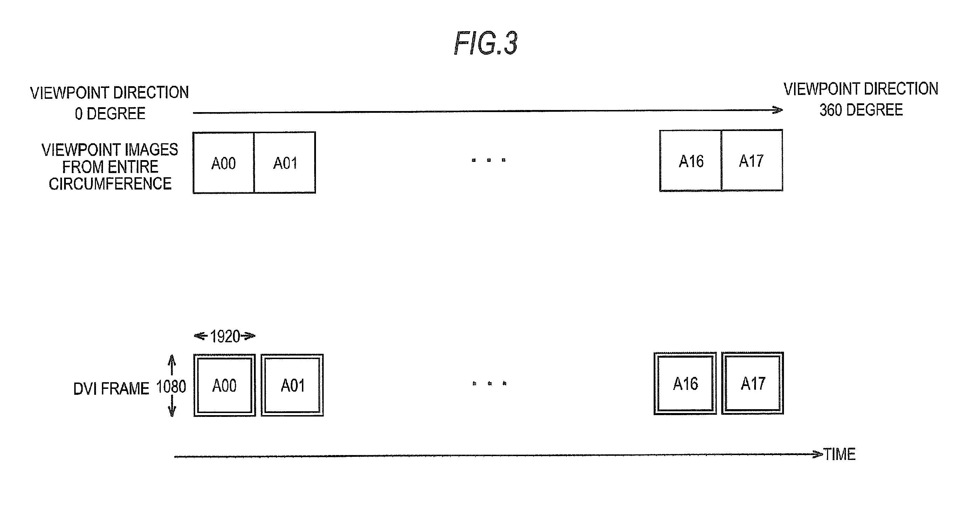

Fig. 3 shows an example of storing entire-circumference viewpoint images A00 to A17 in 18 pieces of DVI frames. In other words, one viewpoint image is stored in one DVI frame. Therefore, when the image size of the DVI frame is 1920×1080 pixels, the image size of respective viewpoint images can be also 1920×1080 pixels. The size of the DVI frame cited here is an example and not limited to this. This is the same after the second arrangement example which will be explained below.

### [Second arrangement example of storing viewpoint images in DVI frames]

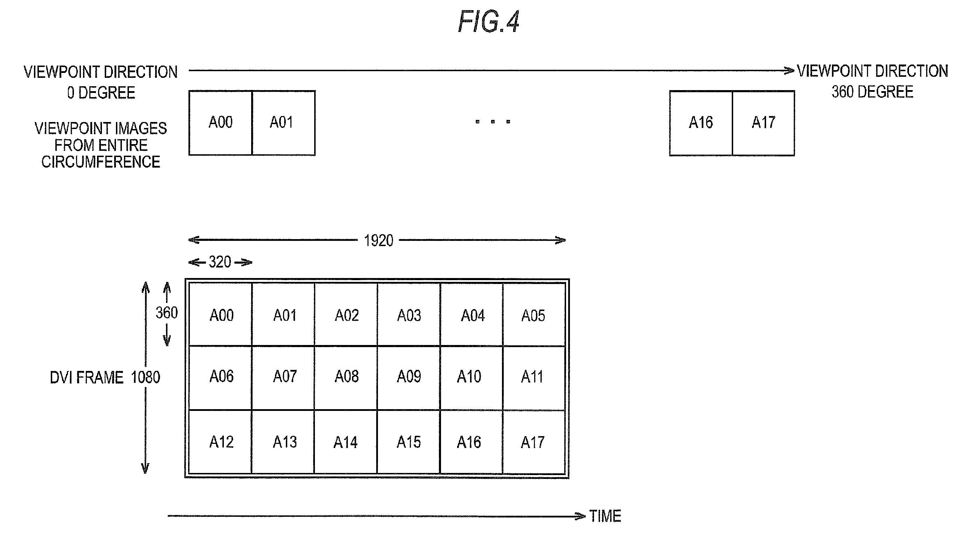

Fig. 4 shows an example of storing entire-circumference viewpoint images A00 to A17 in one DVI frame. In this case, when the image size of the DVI frame is 1920×1080 pixels, it is necessary that the image size of each viewpoint image will be 320x360 pixels.

### [Third arrangement example of storing viewpoint images in DVI frames]

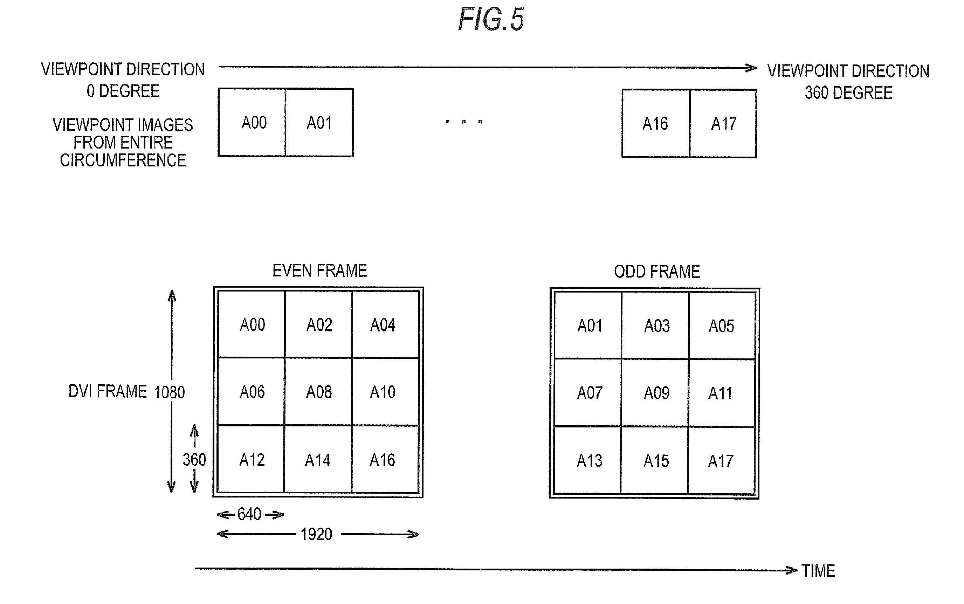

Fig. 5 shows an example of storing entire-circumference viewpoint images A00 to A17 in two DVI frames. In this case, even-numbered images in entire-circumference viewpoint images A00 to A17 are stored in an even frame and odd-numbered images are stored in an odd frame so that viewpoint images which have been adjacent to each other are stored at the same position in respective frames. Also in this case, when the image size of the DVI frame is 1920x1080 pixels, it is necessary that the image size of each viewpoint image will be 640x360 pixels.

### [Fourth arrangement example of storing viewpoint images in DVI frames]

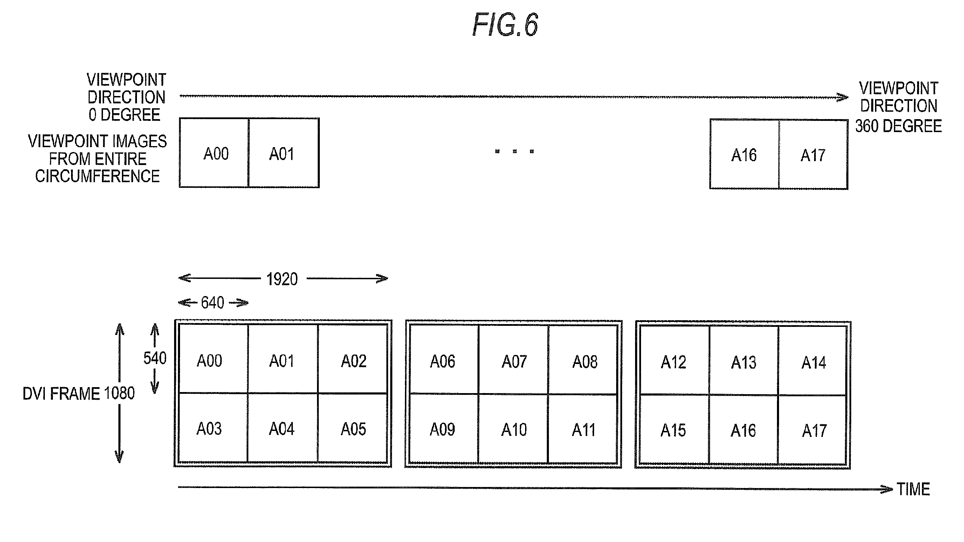

Fig. 6 shows an example of storing entire-circumference viewpoint images A00 to A17 in three DVI frames. In other words, six viewpoint images are stored in one DVI frame. In this case, when the image size of the DVI frame is 1920×1080 pixels, it is necessary that the image size of each viewpoint image will be 640x540 pixels. In the same drawing, the entire-circumference viewpoint images A00 to A17 are simply divided into three frames in sequence, however, it is also preferable that viewpoint images which have been adjacent to one another other are stored at the same position in respective frames in the same manner as the third arrangement (fifth arrangement).

### [Fifth arrangement example of storing viewpoint images in DVI frames]

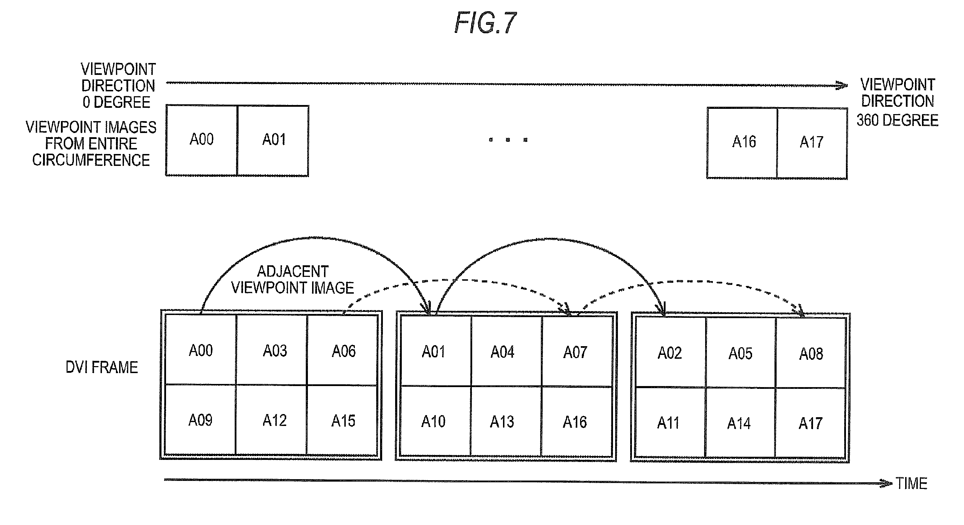

Fig. 7 shows an example in which the entire-circumference viewpoint images A00 to A17 are divided into three DVI frames and viewpoint images which have been adjacent to one another are stored at the same position in respective frames. The viewpoint images which have been adjacent to one another are similar to one another, therefore, the difference generated when each DVI frame is seen as a piece of image is smaller in the fifth arrangement example as compared with the fourth arrangement example. Accordingly, when these DVI frames are encoded by an encoding method using inter-frame prediction, larger reduction of the coding amount can be expected in the fifth arrangement example as compared with the fourth arrangement example.

### [Sixth arrangement example of storing viewpoint images in DVI frames]

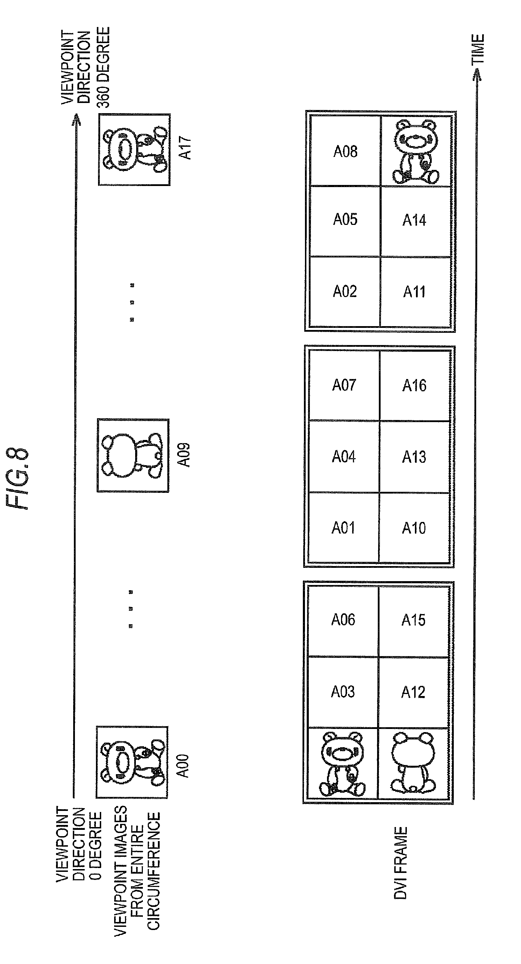

Fig. 8 shows an example of storing viewpoint images which have been adjacent to one another in the same position in respective frames in the same manner as the fifth arrangement example of Fig. 7 after turning the entire-circumference viewpoint images A00 to A17 by 90 degrees in the right direction.

As shown the drawing, the intention to turn viewpoint images by 90 degrees to the right direction is due to a display direction of the display unit in the entire-circumference 3D image display device 30.

Concerning the display direction of the display unit in the entire-circumference 3D image display device 30, viewpoint images of the subject are displayed as lines in the vertical direction. On the other hand, reading of pixels from the DVI frames is performed in the horizontal direction.

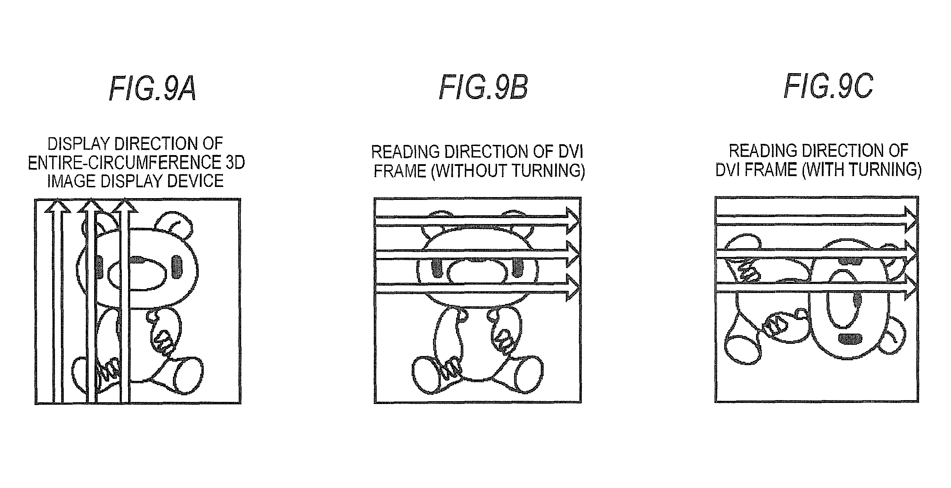

Accordingly, in the fifth arrangement example of Fig. 7, reading is performed in the horizontal direction of the subject as shown in Fig. 9B. Therefore, in order to display viewpoint images of the subject as lines in the vertical direction as shown in Fig. 9A, it is necessary to read the whole viewpoint images of the subject first.

On the other hand, in the case of the sixth arrangement example of Fig. 8, reading is performed in the vertical direction of the subject as shown in Fig. 9C, which corresponds to the display direction in the entire-circumference 3D image display device 30, therefore, it is not necessary to read the whole viewpoint images of the subject first. Accordingly, it is possible to perform display rapidly in the entire-circumference 3D image display device 30 as compared with the case of the fifth arrangement example.

### [Outline of immediate frame generation processing]

Fig. 10 shows the processing outline of generating intermediate frames by interpolating the DVI frames in which entire-circumference viewpoint images are stored.

The intermediate frame generation processing can be applied to a case in which even-numbered images in the entire-circumference viewpoint images are stored in the even frame and odd-numbered images are stored in the odd frame respectively as in the third arrangement example in which viewpoint images are stored in the DVI frames shown in Fig. 5 and further viewpoint images which have been adjacent to one another are stored in the same position in respective frames.

Specifically, an intermediate frame shown in (D) in Fig. 10 (referred to as "n+0.5 frame" here) is generated by applying a prediction technique such as in Motionflow developed by Sony Corporation or MPEG based on an even frame shown in (A) in Fig. 10 (referred to as "n-frame" here) and an odd frame shown in (B) in Fig. 10 (referred to as "n+1 frame" here).

Additionally, a shift frame shown in (C) in Fig. 10 is generated by shifting arrangement of viewpoint images stored in the n-frame shown in (A) in Fig. 10 one by one in the left direction, and an intermediate frame shown in (E) in Fig. 10 (referred to as "n+0.5 frame" here) is generated by applying the prediction technique such as in Motionflow or MPEG based on the "n+1 frame" and the shift frame.

In the "n+0.5 frame" generated here, viewpoint images A1.5, A2.5, ..., A16.5respectively corresponding to viewpoints which have been virtually increased to two times are stored. In the "n+1.5 frame", viewpoint images A2.5, A3.5, ..., A17.5 respectively corresponding to viewpoints which have been virtually increased to two times are stored.

Accordingly, 36 pieces of viewpoint images corresponding to viewpoints shifted by 10 degrees on the entire circumference can be obtained in a state of being stored in four DVI frames (the even frame, the intermediate frame (n+0.5 frame), the odd frame and the intermediate frame (n+1.5 frame).

The intermediate frame generation processing can be executed even when the viewpoint images are stored in the DVI frames in the state in which the viewpoint images are turned as shown in Fig. 8.

The number of viewpoint images in the entire circumference is increased to two times in the above intermediate frame generation processing, however, it is also preferable that the number of viewpoint images in the entire circumference is increased to three times or more.

Furthermore, the number of viewpoint images in the entire circumference is increased in the space direction in the above intermediate frame generation processing, however, it is also preferable that the number of viewpoint images in the entire circumference is increased in the time direction.

### [Configuration example of the image signal processing device 20]

Next, a detailed configuration example of the image signal processing device 20 included in the 3D image display system 10 will be explained.

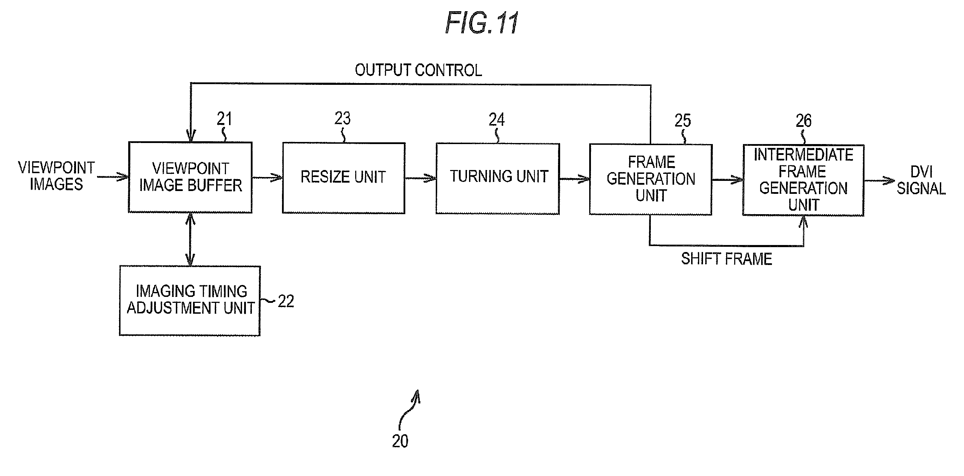

Fig. 11 is a block diagram showing the detailed configuration example of the image signal processing device 20. The image signal processing device 20 includes a viewpoint image buffer 21, an imaging timing adjustment unit 22, a resize unit 23, a turning unit 24, a frame generation unit 25 and an intermediate frame generation unit 26.

The viewpoint image buffer 21 buffers entire-circumference viewpoint images inputted from the outside and output the buffered viewpoint images to the resize unit 23 in a given order in accordance with an output control signal from the frame generation unit 25.

The imaging timing adjustment unit 22 adjusts imaging timings of the buffered entire-circumference viewpoint images (described in detail later).

The resize unit 23 resizes (zoom in or zoom out) the viewpoint images inputted from the viewpoint image buffer 21 in accordance with the number of viewpoint images to be stored in one DVI frame and outputs the images to the turning unit 24. When one viewpoint image is stored in one DVI frame, the resize unit 23 outputs the viewpoint images inputted from the viewpoint image buffer 21 to the turning unit 24 as they are.

The turning unit 24 outputs the resized viewpoint images to the frame generation unit 25 after turning them by 90 degrees.

The frame generation unit 25 generates the DVI frames by arranging the resized and turned viewpoint images, which are inputted from the turning unit 24 in the same manner as in the above first to sixth arrangement examples and outputs the frames to the intermediate frame generation unit 26. The frame generation unit 25 generates the shift frame and outputs the frame to the intermediate frame generation unit 26 when generating intermediated frames in the intermediate frame generation unit 26.

The intermediate frame generation unit 26 generates the intermediate frames by using the DVI frames and the shift frame inputted from the frame generation unit 25 and outputs the DVI frames inputted from the frame generation unit 25 and the generated intermediate frames to the entire-circumference 3D image display device 30 at a subsequent stage.

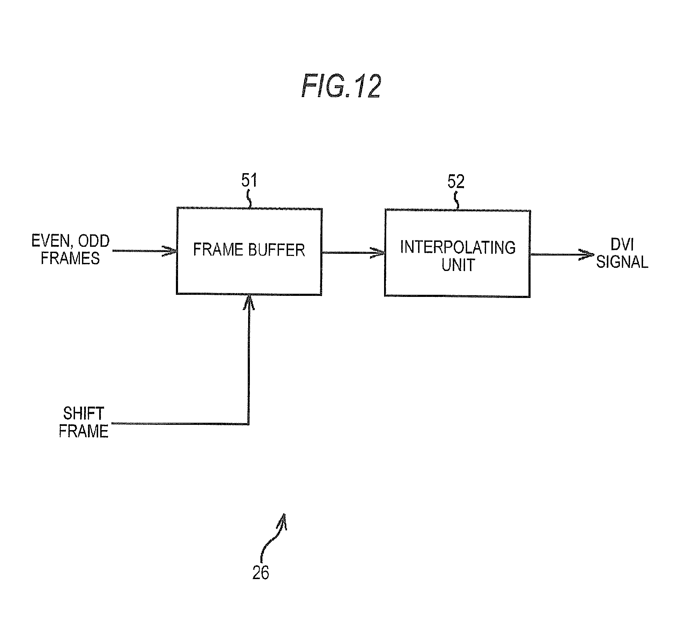

Fig. 12 is a block diagram showing a detailed configuration example of the intermediate frame generation unit 26. The intermediate frame generation unit 26 includes a frame buffer 51 and an interpolating unit 52.

The frame buffer 51 buffers the DVI frames and the shift frame inputted from the frame generation unit 25. The interpolating unit 52 generates the intermediate frame (n+0.5 frame in (D) in Fig. 10) based on the DVI frames buffered in the frame buffer 51 (n-frame and n+1 frame in (A) and (B) in Fig. 10). The interpolating unit 52 also generates the intermediate frame (n+1.5 frame in (E) in Fig. 10) based on the DVI frame (n-frame in (A) in Fig. 10) and the shift frame buffered in the frame buffer 51.

### [Operation of the image signal processing device 20]

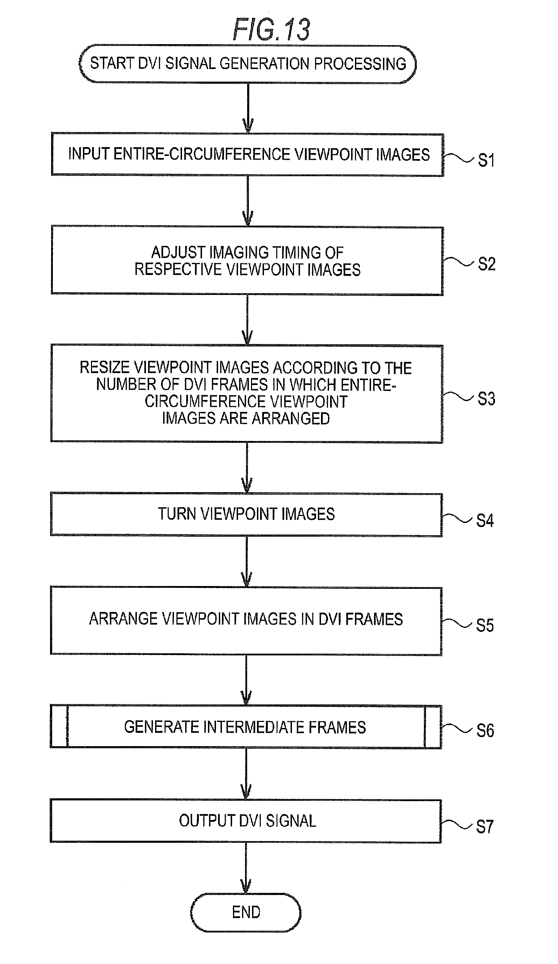

Next, the operation of the image signal processing device 20 will be explained. Fig. 13 is a flowchart for explaining DVI signal generation processing by the image signal processing device 20.

The DVI signal generation processing is executed by using the third arrangement example of Fig. 5, the sixth arrangement example of Fig. 8 and the intermediate frames of (A) to (E) in Fig. 10 together. That is, the entire-circumference viewpoint images A00 to A17 shown in Fig. 2 are divided into the even frame and the odd frame and stored so that viewpoint images which have been adjacent are stored at the same position in respective frames after turning the viewpoint images by 90 degrees, and further, intermediate frames are generated.

In Step S1, the entire-circumference viewpoint images A00 to A17 are inputted to the image signal processing device 20 from the outside. The inputted entire-circumference viewpoint images A00 to A17 are buffered in the viewpoint image buffer 21.

In Step S2, the imaging timing adjustment unit 22 adjusts imaging timings of the buffered entire-circumference viewpoint images A00 to A17. Here, the adjustment of the display timings indicates processing of adjusting the entire-circumference viewpoint images A00 to A17 imaged at the same time so as to correspond to display timings as if the imaging timing is gradually shifted.

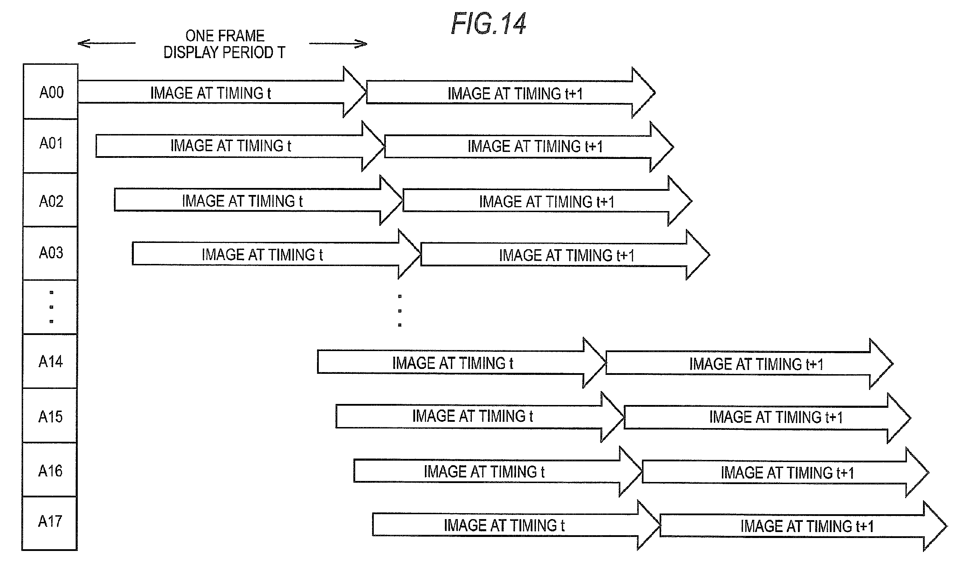

The explanation will be specifically made. The entire-circumference viewpoint images A00 to A17 simultaneously imaged at a timing "t" are displayed for a display period "T" respectively by shifting the display start timing by a period of time obtained by dividing the display period "T" of one frame equally into 18 as shown in Fig. 14. Then, the entire-circumference viewpoint images A00 to A17 simultaneously imaged at a timing "t+1" are respectively displayed next. However, the adjusted images may give an impression that 3D images viewed by the user are not continuous.

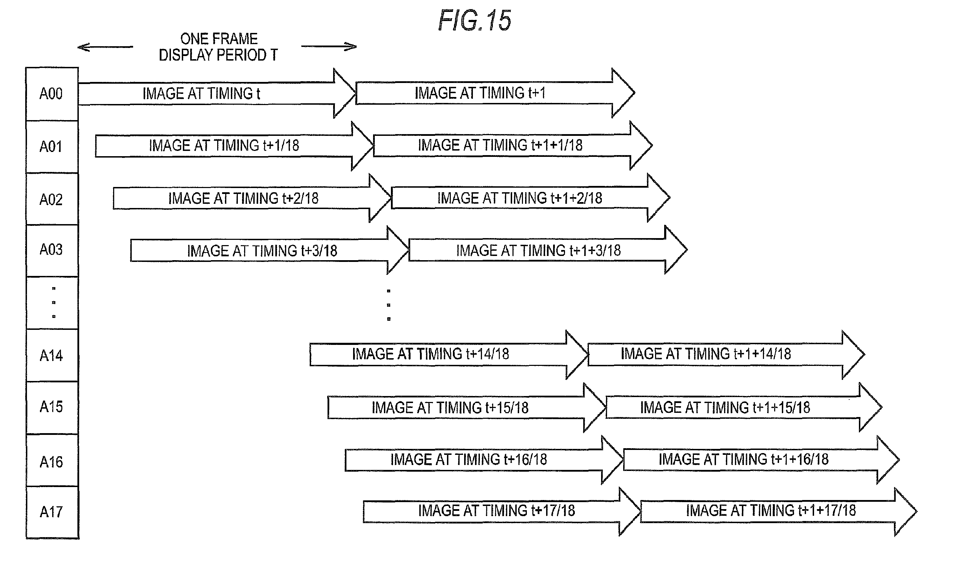

In order to avoid the above, the imaging timings of the entire-circumference viewpoint images A00 to A17 simultaneously imaged at the timing "t" are adjusted as shown in Fig. 15 based on the entire-circumference viewpoint images A00 to A17 simultaneously imaged at the timing "t+1" . That is, viewpoint image A00 is as it is, and the viewpoint image A01 in which imaging timing is shifted by 1/18, the viewpoint image A02 in which imaging timing is shifted by 2/18, ...the viewpoint image A16 in which imaging timing is shifted by 16/18 and the viewpoint image A17 in which imaging timing is shifted by 17/18 are generated by using the prediction technique such as in Motionflow or MPEG.

In the case that the display unit included in the cylinder portion 31 becomes large in size, it is particularly effective to adjust the imaging timings of the entire-circumference viewpoint images A00 to A17 as described above, when the user sees the cylinder portion 31 while shifting the viewpoint or when the rotation speed of the cylinder portion 31 is slow, therefore, prevention of discontinuity in the visible 3D images can be expected.

Let us return to Fig. 13. The entire-circumference viewpoint images the imaging timings of which have been adjusted are inputted from the viewpoint image buffer 21 to the resize unit 23 in accordance with the output control signal from the frame generation unit 25.

In Step S3, the resize unit 23 resizes the viewpoint images A00 to A17 inputted from the viewpoint image buffer 21 and outputs the images to the turning unit 24. In this case, 18 viewpoint images are stored in two DVI frames, therefore, each viewpoint image will be resized to 640x360 pixels when the DVI frame has the size of 1920×1080 pixels.

In Step S4, the turning unit 24 outputs the resized entire-circumference viewpoint images A00 to A17 to the frame generation unit 25 after turning them by 90 degrees.

In Step S5, the frame generation unit 25 divides the resized and turned entire-circumference viewpoint images inputted from the turning unit 24 into the even frame and the odd frame as well as arranges viewpoint images whose viewpoints have been adjacent to each other (for example, the viewpoint images A00 and A01, A02 and A03) at the same position in respective frames to generate the DIV frames (the even frame and the odd frame) to be outputted to the intermediate generation unit 26.

In Step S6, the intermediate generation unit 26 generates intermediate frames by using the DVI frames (the even frame (n-frame) and the odd frame (n+1) frame)) and the shift frame inputted from the frame generation unit 25.

In Step S7, the intermediate generation unit 26 outputs the DVI frames (the even frame (n-frame) and the odd frame (n+1 frame) ) inputted from the frame generation unit 25 and the generated intermediate frames (n+0.5 frame and n+1.5 frame) to the entire-circumference 3D image display device 30 of the subsequent stage. As a result, four frames inputted to the entire-circumference 3D image display device 30 includes 36 pieces of viewpoint images obtained by dividing the entire circumference equally into 36, therefore, it is expected that the 3D images viewed by the user can be displayed more smoothly.

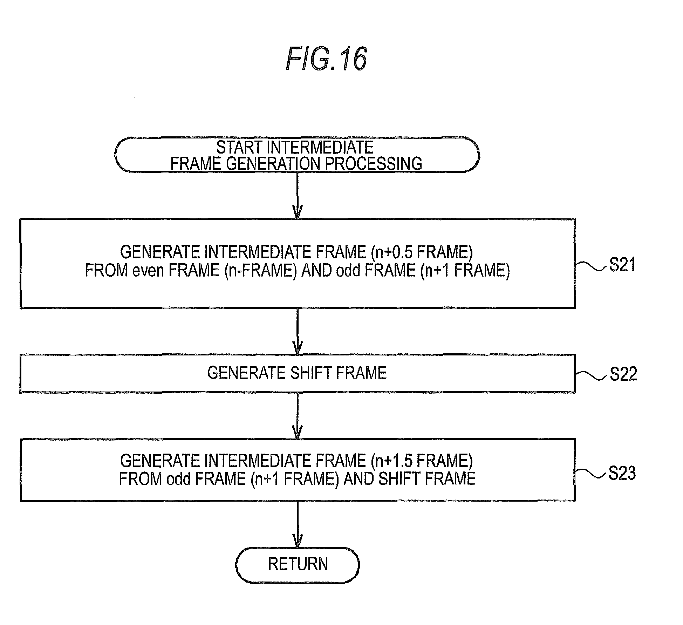

Here, the intermediate frame generation processing in Step S6 will be described in detail with reference to Fig. 16.

In step 521, the frame generation unit 25 outputs the DVI frames (the even frame (n-frame) and the odd frame (n+1 frame)) generated in Step S5 to the intermediate generation unit 26. In the intermediate generation unit 26, the inputted n-frame and the n+1 frame are buffered in the frame buffer 51.

Further, in Step S21, the interpolating unit 52 of the intermediate frame generation unit 26 generates the intermediate frame (n+0.5 frame) from the buffered n-frame and the n+1 frame.

In Step S22, the frame generation unit 25 generates the shift images obtained by shifting viewpoint images in the even frame (n-frame) generated in Step S5 and output the shift images to the intermediate frame generation unit 26. In the intermediate generation unit 26, the inputted shift frame is buffered in the frame buffer 51.

In Step S23, the interpolating unit 52 generates the intermediate frame n+1.5 frame from the buffered n+1 frame and the shift frame. The intermediate generation processing ends here.

The explanation of the DVI signal generation processing by the image signal processing device 20 ends here.

### [Configuration example and operation of the entire-circumference 3D image display device 30]

Next, Fig. 17 shows a configuration example of the entire-circumference 3D display device 30 to which the DVI signal outputted from the image signal processing device 20 is inputted.

The entire-circumference 3D display device 30 includes a viewpoint image separation unit 71, a viewpoint image buffer 72, a display control unit 73, the display unit 74 and a DVI signal output unit 75.

The viewpoint image separation unit 71 extracts viewpoint images from each DVI frame of the DVI signal inputted from the image signal processing device 20 of the previous stage and outputs the images to the viewpoint image buffer 72. The viewpoint image buffer 72 buffers viewpoint images inputted from the viewpoint image separation unit 71.

The display control unit 73 reads the respective viewpoint images buffered in the viewpoint image buffer 72 in accordance with a given order and displays the images on the display unit 74.

The DVI signal output unit 75 relays the DVI signal inputted from the image signal processing device 20 of the previous stage to a subsequent stage (for example, the planar display 40).

In the entire-circumference 3D image display device 30, the DVI signal is inputted from the image signal processing device 20 of the previous stage, separated into viewpoint images by the viewpoint image separation unit 71 and buffered in the viewpoint image buffer 72. Then, the buffered viewpoint images are read by the display control unit 73 in the given order and displayed on the display unit 74.

The explanation of entire-circumference 3D image display device 30 ends here.

A series of processing in the above image signal processing device 20 or the entire-circumference 3D image display device 30 can be executed by hardware as well as by software. When the series of processing is executed by software, programs included in the software are installed from program recording media into a computer incorporated in dedicated hardware or a general-purpose personal computer capable of executing various functions by installing various programs.

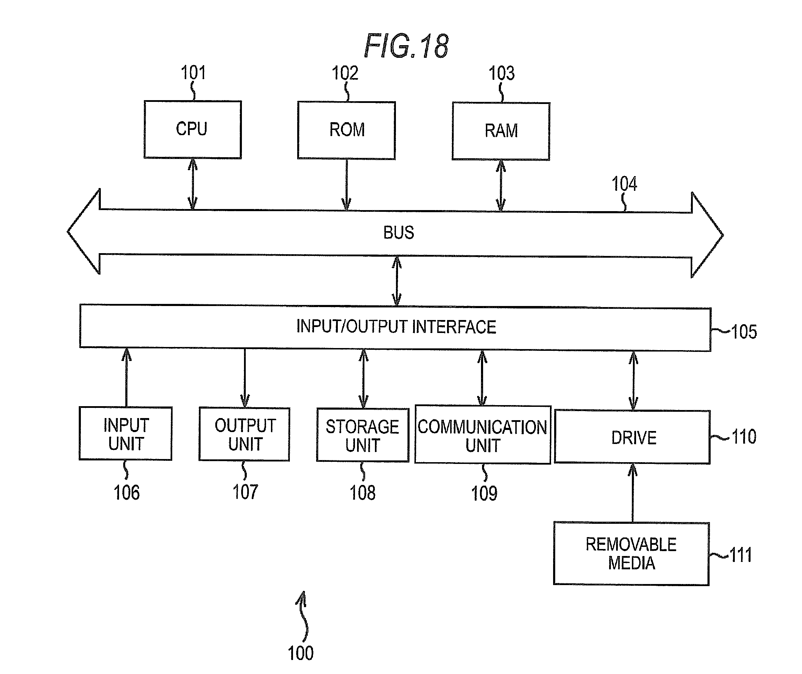

Fig. 18 is a block diagram showing a hardware configuration example of a computer executing the above series of processing by programs.

In a computer 100, a CPU (Central Processing Unit) 101, a ROM (Read Only Memory) 102, a RAM (Random Access Memory) 103 are mutually connected through a bus 104.

An input/output interface 105 is further connected to the bus 104. To the input/output interface 105, an input unit 106 including a keyboard, a mouse, a microphone and the like, an output unit 107 including a display, a speaker and the like, a storage unit 108 including a hard disk, a nonvolatile memory and the like, a communication unit 109 including a network interface and the like and a drive 110 driving removable media 111 such as a magnetic disk, a optical disk, a magnet-optic disk and a semiconductor disk.

In the computer configured as the above, the CPU 101 loads programs stored in, for example, the storage unit 108 to the RAM 103 through the input/output interface 105 and the bus 104 to thereby execute the above series of processing.

Programs executed by the computer may be programs processed in time series along the order explained in the specification as well as may be processed in parallel or at necessary timing such as when calling is performed.

Furthermore, programs may be processed by one computer or distributed processing may be performed by plural computers. Moreover, programs may be executed by being transferred to a distant computer.

In the specification, the system indicates the whole apparatus including plural devices.

The embodiments of the invention are not limited to the above described embodiments, and can be variously modified within a scope not departing from the appended claims.

The present application contains subject matter related to that disclosed in Japanese Priority Patent Application JP 2009-238367 filed in the Japan Patent Office on October 15, 2009.

An embodiment of the invention provides an image display system comprising:
an image display device displaying 3D images in a state of seeing a subject from the entire circumference; and
an image signal processing device supplying entire-circumference viewpoint images including plural viewpoint images respectively corresponding to plural viewpoints provided on the circumference of a circle with the center at a subject to the image display device,
wherein the image signal processing device includes
a buffering means for buffering the inputted entire-circumference viewpoint images and
an arrangement means for generating a video signal of a given video standard by arranging the buffered entire-circumference viewpoint images on frames of the given video standard,
the image display device includes
an extraction means for extracting the entire-circumference viewpoint images from the frames of the video signal inputted from the image signal processing device and
a display control means for displaying the extracted entire-circumference viewpoint images on a display.

An embodiment of the invention provides an image signal processing device supplying entire-circumference viewpoint images including plural viewpoint images to a display device, comprising:
a buffering means for buffering the inputted entire-circumference viewpoint images; and
an arrangement means for arranging the buffered entire-circumference viewpoint images on frames of a given video standard.

An embodiment of the invention provides an image signal processing device supplying entire-circumference viewpoint images including plural viewpoint images respectively corresponding to plural viewpoints provided on the circumference of a circle with the center at a subject to a display device displaying the subject as a stereoscopic image, comprising:
a buffering unit configured to buffer the inputted entire-circumference viewpoint images; and
an arrangement unit configured to generate a video signal of a given video standard by arranging the buffered entire-circumference viewpoint images on frames of the given video standard.
An embodiment of the invention provides an image display device displaying 3D images in a state of seeing a subject from the entire circumference based on a video signal inputted from an image signal processing device including
a buffering unit configured to buffer entire-circumference viewpoint images including plural viewpoint images respectively corresponding to plural viewpoints provided on the circumference of a circle with the center at a subject and
an arrangement unit configured to generate a video signal of a given video standard by arranging the buffered entire-circumference viewpoint images on frames of the given video standard, the image display device comprising:
   an extraction unit configured to extract the entire-circumference viewpoint images from the frames of the video signal inputted from the image signal processing device; and
   a display control unit configured to display the extracted entire-circumference viewpoint images on a display.

An embodiment of the invention provides an image signal processing device supplying entire-circumference viewpoint images including plural viewpoint images to a display device, comprising:
a buffering unit configured to buffer the inputted entire-circumference viewpoint images; and
an arrangement unit configured to arrange the buffered entire-circumference viewpoint images on frames of a given video standard.

An embodiment of the invention provides an image display system comprising:
an image display device displaying entire-circumference images; and
an image signal processing device supplying plural viewpoint images to the image display device,
wherein the image signal processing device includes
a buffering unit configured to buffer the inputted entire-circumference viewpoint images and
an arrangement unit configured to arrange the buffered plural viewpoint images on frames of a given video standard,
the image display device includes
an extraction unit configured to extract the plural viewpoint images from frames and
a display control unit configured to display the extracted plural viewpoint images on a display.

## Claims

1. An image signal processing device supplying entire-circumference viewpoint images including plural viewpoint images respectively corresponding to plural viewpoints provided on the circumference of a circle with the center at a subject to a display device displaying the subject as a stereoscopic image, comprising:
a buffering means for buffering the inputted entire-circumference viewpoint images; and
an arrangement means for generating a video signal of a given video standard by arranging the buffered entire-circumference viewpoint images on frames of the given video standard.

2. The image signal processing device according to claim 1, wherein the arrangement means arranges the buffered entire-circumference viewpoint images by dividing them into plural frames.

3. The image signal processing device according to claim 2, wherein the arrangement means divides the buffered entire-circumference viewpoint images into plural frames and arranges the viewpoint images whose viewpoints are adjacent at the same position in the plural frames.

4. The image signal processing device according to any one of claims 1 to 3, further comprising:
a turning means for turning the buffered entire-circumference viewpoint images by given degrees,
wherein the arrangement means arranges the turned entire-circumference viewpoint images on the frames.

5. The image signal processing device according to claim 2 or 3, further comprising:
a generation means for generating intermediate frames in which plural viewpoint images respectively corresponding to virtual viewpoints assumed between plural viewpoints provided on the circumference of the circle are arranged based on the plural frames in which the entire-circumference viewpoint images are arranged.

6. The image signal processing device according to claim 2 or 3, further comprising:
an adjustment means for adjusting the plural viewpoint images simultaneously imaged from the plural viewpoints provided on the circumference of the circle with the center at the subject so that imaging timings thereof are different.

7. An image signal processing method of an image signal processing device supplying entire-circumference viewpoint images including plural viewpoint images respectively corresponding to plural viewpoints provided on the circumference of a circle with the center at a subject to a display device displaying the subject as a stereoscopic image, comprising the steps of:
by the image signal processing device,
buffering the inputted entire-circumference viewpoint images; and
generating a video signal of a given video standard by arranging the buffered entire-circumference viewpoint images on frames of the given video standard.

8. A program for controlling an image signal processing device supplying entire-circumference viewpoint images including plural viewpoint images respectively corresponding to plural viewpoints provided on the circumference of a circle with the center at a subject to a display device displaying the subject as a stereoscopic image, which allows a computer of the image signal processing device to execute processing including the steps of
buffering the inputted entire-circumference viewpoint images; and
generating a video signal of a given video standard by arranging the buffered entire-circumference viewpoint images on frames of the given video standard.

9. An image display device displaying 3D images in a state of seeing a subject from the entire circumference based on a video signal inputted from an image signal processing device including
a buffering means for buffering entire-circumference viewpoint images including plural viewpoint images respectively corresponding to plural viewpoints provided on the circumference of a circle with the center at a subject and
an arrangement means for generating a video signal of a given video standard by arranging the buffered entire-circumference viewpoint images on frames of the given video standard, the image display device comprising:
an extraction means for extracting the entire-circumference viewpoint images from the frames of the video signal inputted from the image signal processing device; and
a display control means for displaying the extracted entire-circumference viewpoint images on a display.

10. The image display device according to claim 9, further comprising:
a video signal output means for outputting the video signal inputted from the image signal processing device to another display device.

11. An image display method of an image display device displaying 3D images in a state of seeing a subject from the entire circumference based on a video signal inputted from an image signal processing device including
a buffering means for buffering entire-circumference viewpoint images including plural viewpoint images respectively corresponding to plural viewpoints provided on the circumference of a circle with the center at a subject and
an arrangement means for generating a video signal of a given video standard by arranging the buffered entire-circumference viewpoint images on frames of the given video standard, the method comprising the steps of:
by the image display device,
extracting the entire-circumference viewpoint images from the frames of the video signal inputted from the image signal processing device; and
displaying the extracted entire-circumference viewpoint images on a display.

12. A program for controlling an image display device displaying 3D images in a state of seeing a subject from the entire circumference based on a video signal inputted from an image signal processing device including
a buffering means for buffering entire-circumference viewpoint images including plural viewpoint images respectively corresponding to plural viewpoints provided on the circumference of a circle with the center at a subject and
an arrangement means for generating a video signal in a given video standard by arranging the buffered entire-circumference viewpoint images on frames of the given video standard, which allows a computer of the image display device to execute processing including the steps of
extracting the entire-circumference viewpoint images from the frames of the video signal inputted from the image signal processing device and
displaying the extracted entire-circumference viewpoint images on a display.

13. A video signal in which entire-circumference viewpoint images including plural viewpoint images respectively corresponding to plural viewpoints provided on the circumference of a circle with the center at a subject are arranged on frames of a given video standard.

14. An image display system comprising:
an image display device displaying entire-circumference images; and
an image signal processing device supplying plural viewpoint images to the image display device,
wherein the image signal processing device includes
a buffering means for buffering the inputted entire-circumference viewpoint images and
an arrangement means for arranging the buffered plural viewpoint images on frames of a given video standard,
the image display device includes
an extraction means for extracting the plural viewpoint images from frames and
a display control means for displaying the extracted plural viewpoint images on a display.

15. An image display system comprising:
an image display device displaying 3D images in a state of seeing a subject from the entire circumference; and
an image signal processing device supplying entire-circumference viewpoint images including plural viewpoint images respectively corresponding to plural viewpoints provided on the circumference of a circle with the center at a subject to the image display device,
wherein the image signal processing device includes
a buffering unit configured to buffer the inputted entire-circumference viewpoint images and
an arrangement unit configured to generate a video signal of a given video standard by arranging the buffered entire-circumference viewpoint images on frames of the given video standard,
the image display device includes
an extraction unit configured to extract the entire-circumference viewpoint images from the frames of the video signal inputted from the image signal processing device and
a display control unit configured to display the extracted entire-circumference viewpoint images on a display.
